(19) Europäisches Patentamt
European Patent Office
Office européen des brevets

(11) EP 1 353 559 B1

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(21) Anmeldenummer: **01984832.4**

(22) Anmeldetag: **13.12.2001**

(51) Int Cl.:
***A01N 47/24*** *(2006.01)* *A01N 47/24* *(2006.01)*
*A01N 43/90* *(2006.01)* *A01N 43/50* *(2006.01)*

(86) Internationale Anmeldenummer:
**PCT/EP2001/014635**

(87) Internationale Veröffentlichungsnummer:
**WO 2002/049438 (27.06.2002 Gazette 2002/26)**

(54) **FUNGIZIDE MISCHUNGEN AUF DER BASIS VON CARBAMATEN**
FUNGICIDAL MIXTURES BASED ON CARBAMATES
MELANGES FONGICIDES A BASE DE CARBAMATES

(84) Benannte Vertragsstaaten:
**AT BE CH CY DE DK ES FI FR GB GR IE IT LI LU MC NL PT SE TR**
Benannte Erstreckungsstaaten:
**LT LV RO SI**

(30) Priorität: **18.12.2000 DE 10063046**

(43) Veröffentlichungstag der Anmeldung:
**22.10.2003 Patentblatt 2003/43**

(73) Patentinhaber: **BASF Aktiengesellschaft**
**67056 Ludwigshafen (DE)**

(72) Erfinder:
- **MÜLLER, Bernd**
  **67227 Frankenthal (DE)**
- **PTOCK, Arne**
  **67065 Ludwigshafen (DE)**
- **AMMERMANN, Eberhard**
  **64646 Heppenheim (DE)**
- **STIERL, Reinhard**
  **67112 Mutterstadt (DE)**
- **LORENZ, Gisela**
  **67434 Hambach (DE)**
- **STRATHMANN, Siegfried**
  **67117 Limburgerhof (DE)**
- **SCHERER, Maria**
  **76829 Landau-Godramstein (DE)**
- **SCHELBERGER, Klaus**
  **67161 Gönnheim (DE)**
- **LEYENDECKER, Joachim**
  **67454 Hassloch (DE)**

(56) Entgegenhaltungen:
**WO-A-96/32015** **WO-A-97/10716**
**WO-A-98/47370** **WO-A-98/48628**
**WO-A-98/53689** **WO-A-98/53690**
**WO-A-98/58544**

- **C. TOMLIN (ED.) : "The e-Pesticide Manual 1999-2000 (Eleventh Edition) Version 1.1" 2000 , BRITISH CROP PROTECTION COUNCIL , FARNHAM GB XP002200538 Eintrag "IKF-916"**
- **MITANI SHIGERU ET AL: "The biochemical mode of action of the novel selective fungicide cyazofamid: Specific inhibition of mitochondrial complex III in Phythium spinosum." PESTICIDE BIOCHEMISTRY AND PHYSIOLOGY, Bd. 71, Nr. 2, Oktober 2001 (2001-10), Seiten 107-115, XP002200537 ISSN: 0048-3575**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft fungizide Mischungen, enthaltend

A) Carbamate der Formel I,

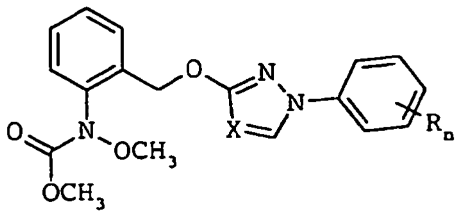

I

in der X CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, eines seiner Salze oder Addukte, und

B) Imidazolderivate der Formel II

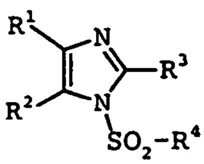

II

in der $R^1$ und $R^2$ Halogen und Phenyl, welches durch Halogen oder $C_1$-$C_4$-Alkyl substituiert sein kann, bedeuten oder

| | |
|---|---|
| $R^1$ und $R^2$ | gemeinsam mit der überbrückenden C=C-Doppelbindung eine 3,4-Difluormethylendioxyphenyl-Gruppe bilden; |
| $R^3$ | Cyano oder Halogen, und |
| $R^4$ | Di-($C_1$-$C_4$-alkyl)amino oder<br>Isoxazol-4-yl, welches zwei $C_1$-$C_4$-Alkylreste tragen kann, bedeuten, |

in einer synergistisch wirksamen Menge.

Außerdem betrifft die Erfindung Verfahren zur Bekämpfung von Schadpilzen mit Mischungen der Verbindungen I und II und die Verwendung der Verbindungen I und der Verbindungen II zur Herstellung derartiger Mischungen.

Die Verbindungen der Formel I, ihre Herstellung und ihre Wirkung gegen Schadpilze sind aus der Literatur bekannt (WO-A 93/15046; WO-A 96/01256 und WO-A 96/01258).

Ebenfalls bekannt sind die Imidazolderivate der Formel II, ihre Herstellung und ihre Wirkung gegen Schadpilze (EP-A 299 196, WO-A 97/06171).

WO-A 98/47370 betrifft fungizide wirkstoffkombinationen aus einer Imidazol der darin abgebildeten Formel (I) und einem weiteren fungiziden Wirkstoff wie zum Beispiel Kresoxim-methyl. WO-A 98/53689, WO-A 98/58544 und WO-A 98/53690 offenbaren fungizide Mischungen, welche ein Fungizid des Carbamat-Typs und einen weiteren Wirkstoff enthalten. WO-A 96/32015 und WO-A 97/10716 offenbaren fungizide Mischungen, die einen die Atmung am Cytochrom-Komplex III hemmenden Wirkstoff und Chinolinderivate bzw. Amidverbindungen enthalten.

WO-A 98/48628 offenbart Zusammensetzungen zur Kontrolle schädlicher Bioorganismen, die eine Imidazol-Verbindung der darin abgebildeten Formel (I) wie z. B. Cyazofamid und eine anorganische Phosphor-Verbindung und/oder einen fungiziden Wirkstoff, wie zum Beispiel Azoxystrobin oder Kresoxim-methyl, oder eine wirksamkeitssteigernde Substanz enthält.

In "The e-Pesticide Manual 1999-2000 (Eleventh Edition) Version 1.1' 2000, British Crop Protection Council" werden die biochemischen Eigenschaften des fungiziden Wirkstoffs Cyazofamid, einer Cyanoimidazolverbindung, die die Atmung am Cytochrom-Komplex III hemmt, beschrieben.

Im Hinblick auf eine Senkung der Aufwandmengen und eine Verbesserung des Wirkungsspektrums der bekannten Verbindungen I und II lagen der vorliegenden Erfindung Mischungen als Aufgabe zugrunde, die bei verringerter

Gesamtmenge an ausgebrachten Wirkstoffen eine verbesserte Wirkung gegen Schadpilzen aufweisen (synergistische Mischungen).

Demgemäß wurde die eingangs definierte Mischung gefunden. Es wurde außerdem gefunden, daß sich bei gleichzeitiger, und zwar gemeinsamer oder getrennter Anwendung der Verbindungen I und der Verbindungen II oder bei Anwendung der Verbindungen I und der Verbindungen II nacheinander Schadpilze besser bekämpfen lassen, als mit den Einzelverbindungen allein.

Die Formel I repräsentiert insbesondere Carbamate, in denen die Kombination der Substituenten einer Zeile der folgenden Tabelle entspricht:

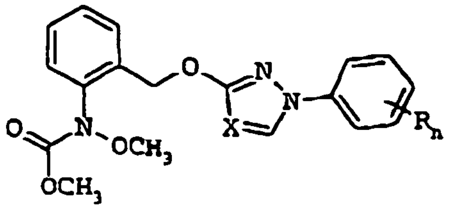

I

| Nr. | x | $R_n$ |
|---|---|---|
| I-1 | N | 2-F |
| I-2 | N | 3-F |
| I-3 | N | 4-F |
| I-4 | N | 2-Cl |
| I-5 | N | 3-Cl |
| I-6 | N | 4-Cl |
| I-7 | N | 2-Br |
| I-8 | N | 3-Br |
| I-9 | N | 4-Br |
| I-10 | N | 2-$CH_3$ |
| I-31 | N | 3-$CH_3$ |
| I-12 | N | 4-$CH_3$ |
| I-13 | N | 2 -$CH_2CH_3$ |
| I-14 | N | 3-$CH_2CH_3$ |
| I-15 | N | 4-$CH_2CH_3$ |
| I-16 | N | 2-$CH(CH_3)_2$ |
| I-17 | N | 3-$CH(CH_3)_2$ |
| I-18 | N | 4-$CH(CH_3)_2$ |
| I-19 | N | 2-$CF_3$ |
| I-20 | N | 3-$CF_3$ |
| I-21 | N | 4-$CF_3$ |
| 1-22 | N | 2,4-$F_2$ |
| I-23 | N | 2,4-$Cl_2$ |
| I-24 | N | 3,4-$Cl_2$ |
| I-25 | N | 2-Cl, 4-$CH_3$ |
| I-26 | N | 3-Cl, 4-$CH_3$ |

Tabelle fortgesetzt

| Nr. | x | $R_n$ |
|---|---|---|
| I-27 | CH | 2-F |
| 1-28 | CH | 3-F |
| I-29 | CH | 4-F |
| I-30 | CH | 2-Cl |
| I-31 | CH | 3-Cl |
| I-32 | CH | 4-Cl |
| I-33 | CH | 2-Br |
| I-34 | CH | 3-Br |
| I-35 | CH | 4-Br |
| I-36 | CH | $2\text{-}CH_3$ |
| I-37 | CH | $3\text{-}CH_3$ |
| I-38 | CH | $4\text{-}CH_3$ |
| I-39 | CH | $2\text{-}CH_2CH_3$ |
| I-40 | CH | $3\text{-}CH_2CH_3$ |
| I-41 | CH | $4\text{-}CH_2CH_3$ |
| I-42 | CH | $2\text{-}CH(CH_3)_2$ |
| I-43 | CH | $3\text{-}CH(CH_3)_2$ |
| I-44 | CH | $4\text{-}CH(CH_3)_2$ |
| I-45 | CH | $2\text{-}CF_3$ |
| I-46 | CH | $3\text{-}CF_3$ |
| I-47 | CH | $4\text{-}CF_3$ |
| I-48 | CH | $2,4\text{-}F_2$ |
| I-49 | CH | $2,4\text{-}Cl_2$ |
| I-50 | CH | $3,4\text{-}Cl_2$ |
| I-51 | CH | $2\text{-}Cl, 4\text{-}CH_3$ |
| I-52 | CH | $3\text{-}Cl, 4\text{-}CH_3$ |

Besonders bevorzugt werden die Verbindungen I-12. I-23. I-32 und I-38.

Verbindungen der Formel II sind bevorzugt, in der $R^1$ Halogen, insbesondere Chlor bedeutet und $R^2$ für Tolyl, insbesondere p-Tolyl steht.

Gleichermaßen bevorzugt sind Verbindungen der Formel II, in der $R^4$ Dimethylamino bedeutet.

Daneben ist die Verbindung der Formel IIa (common name: cyazofamid) besonders bevorzugt. Sie ist aus EP-A 298 196 bekannt.

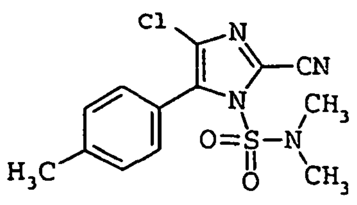

IIa

Weiterhin bevorzugt sind Verbindungen der Formel II, in der $R^1$ und $R^2$ gemeinsam mit der überbrückenden C=C-Doppelbindung eine 3,4-Difluormethylendioxyphenylgruppe bilden.

Daneben sind Verbindungen der Formel II bevorzugt, in denen $R^4$ 3,5-Dimethylisoxazol-4-yl bedeutet.

Besonders bevorzugt sind die Verbindungen der Formel IIb, in der X Halogen bedeutet.

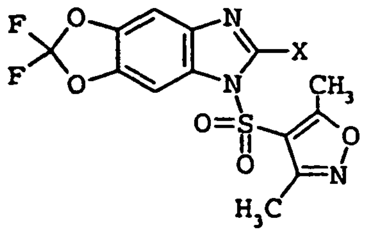

IIb

Halogen steht für Fluor, Chlor, Brom und Jod. Besonders bevorzugt sind Verbindungen der Formel IIb, in denen X für Brom (IIb.1) oder Chlor (IIb.2) steht.

Die Verbindungen I und II sind wegen des basischen Charakters der in ihnen enthaltenden Stickstoffatome in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der ersten bis achten Nebengruppe, vor allem Chrom, Mangan, Eisen, Kobalt, Nickel, Kupfer, Zink und daneben der zweiten Hauptgruppe, vor allem Calcium und Magnesium, der dritten und vierten Hauptgruppe, insbesondere Aluminium, Zinn und Blei in Betracht. Die Metalle können dabei gegebenenfalls in verschiedenen ihnen zukommenden Wertigkeiten vorliegen.

Bevorzugt setzt man bei der Bereitstellung der Mischungen die reinen Wirkstoffe I und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten, Phycomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: Blumeria graminis (echter Mehltau) an Getreide, Erysiphe cichoracearum und Sphaerotheca fuliginea an Kürbisgewächsen, Podosphaera leucotricha an Äpfeln, Uncinula necator an Reben, Puccinia-Arten an Getreide, Rhizoctonia-Arten an Baumwolle, Reis und Rasen, Ustilago-Arten an Getreide und Zukkerrohr, Venturia inaequalis (Schorf) an Äpfeln, Helminthosporium-Arten an Getreide, Septoria nodorum an Weizen, Botrytis cinera (Grauschimmel) an Erdbeeren, Gemüse, Zierpflanzen und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Pseudoperonospora-Arten in Hopfen und Gurken, Alternaria-Arten an Gemüse und Obst, Mycosphaerella-Arten in Bananen sowie Fusarium- und Verticillium-Arten.

Sie sind außerdem im Materialschutz (z.B. Holzschutz) anwendbar, beispielsweise gegen Paecilomyces variotii.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 20:1 bis 1:100, insbesondere 5:1 bis 1:100, vorzugsweise 2:1 bis 1:80 angewendet.

Die Aufwandmengen der erfindungsgemäßen Mischungen liegen, vor allem bei landwirtschaftlichen Kulturflächen, je nach Art des gewünschten Effekts bei 0,01 bis 8 kg/ha, vorzugsweise 0,1 bis 5 kg/ha, insbesondere 0,1 bis 3.0 kg/ha.

Die Aufwandmengen liegen dabei für die Verbindungen I bei 0,01 bis 2,5 kg/ha, bevorzugt 0,01 bis 1 kg/ha, vorzugsweise 0,05 bis 0,5 kg/ha, insbesondere 0,05 bis 0,3 kg/ha.

Die Aufwandmengen für die Verbindungen II liegen entsprechend bei 0,01 bis 10 kg/ha, bevorzugt 0,01 bis 1 kg/ha, vorzugsweise 0,02 bis 0,5 kg/ha, insbesondere 0,05 bis 0,3 kg/ha.

Bei der Saatgutbehandlung werden im allgemeinen Aufwandmengen an Mischung von 0,001 bis 250 g/kg Saatgut, vorzugsweise 0.01 bis 100 g/kg, insbesondere 0,01 bis 50 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylenalkylether, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I oder II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I oder II bzw. der Mischung aus den Verbindungen I und II. Die Wirkstoffe werden dabei in einer Reinheit von 90% bis 100%, vorzugsweise 95% bis 100% (nach NMR- oder HPLC-Spektrum) eingesetzt.

Die Anwendung der Verbindungen I oder II, der Mischungen oder der entsprechenden Formulierungen erfolgt so, daß man die Schadpilze, deren Lebensraum oder die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt.

Die Anwendung kann vor oder nach dem Befall durch die Schadpilze erfolgen.

Anwendungsbeispiel

Die synergistische Wirkung der erfindungsgemäßen Mischungen ließ sich durch die folgenden Versuche zeigen:

Die Wirkstoffe wurden getrennt oder gemeinsam als 10%ige Emulsion in einem Gemisch aus 63 Gew.-% Cyclohexanon und 27 Gew.-% Emulgator aufbereitet und entsprechend der gewünschten Konzentration mit Wasser verdünnt.

Die Auswertung erfolgte durch Feststellung der befallenen Blattflächen in Prozent. Diese Prozent-Werte wurden

in Wirkungsgrade umgerechnet. Der Wirkungsgrad (H) wurde nach der Formel von Abbot wie folgt bestimmt:

$$W = (1 - \alpha) \cdot 100/\beta$$

α entspricht dem Pilzbefall der behandelten Pflanzen in % und
β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen.

$$\text{Colby Formel: } E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b
x der Wirkungsgrad, ausgedrückt in % der unbehandelten Kontrolle, beim Einsatz des Wirkstoffs A in der Konzentration a
y der Wirkungsgrad, ausgedrückt in % der unbehandelten Kontrolle, beim Einsatz des Wirkstoffs B in der Konzentration b

Anwendungsbeispiel: Wirksamkeit gegen Rebenperonospora verursacht durch Plasmopara viticola

Blätter von Topfreben der Sorte "Müller-Thurgau" wurden mit wäßriger Wirkstoffaufbereitung, die mit einer Stammlösung bestehend aus 10 % Wirkstoff, 85 % Cyclohexanon und 5 % Emulgiermittel angesetzt wurde, bis zur Tropfnässe besprüht. Am folgenden Tag wurden die Unterseiten der Blätter mit einer wäßrigen Zoosporenaufschwemmung von Plasmopara viticola inokuliert. Danach wurden die Reben zunächst für 48 Stunden in einer wasserdampfgesättigten Kammer bei 24°C und anschließend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

Tabelle A - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 1 | Kontrolle (unbehandelt) | (70% Befall) | 0 |
| 2 | I-23 | 0,25<br>0,06 | 29<br>0 |
| 3 | I-32 | 0,25<br>0,06 | 71<br>29 |
| 4 | I-38 | 0,25<br>0,06 | 50<br>14 |
| 5 | IIa | 4<br>1<br>0,25 | 71<br>57<br>14 |
| 6 | IIb.1 | 4<br>1<br>0,25 | 57<br>29<br>14 |

Tabelle B - erfindungsgemäße Kombinationen

| Beispiel | Wirkstoffmischung Konzentration Mischungsverhältnis | beobachteter Wirkungsgrad | berechneter Wirkungsgrad*) |
|---|---|---|---|
| 7 | I-23 + IIa<br>0,25 + 4 ppm<br>1 : 16 | 93 | 80 |
| 8 | I-23 + IIa<br>0,06 + 1 ppm<br>1 : 16 | 64 | 41 |
| 9 | I-23 + IIa<br>0,06 + 4 ppm<br>1 : 64 | 86 | 71 |
| 10 | I-23 + IIa<br>0,25 + 0,25 ppm<br>1 : 1 | 57 | 39 |
| 11 | I-23 + IIa<br>0,06 + 0,25 ppm<br>1 : 4 | 43 | 14 |
| 12 | I-32 + IIa<br>0,06 + 1 ppm<br>1 : 16 | 71 | 45 |
| 13 | I-32 + IIa<br>0,06 + 4 ppm<br>1 : 64 | 93 | 80 |
| 14 | I-32 + IIa<br>0,25 + 0,25 ppm<br>1 : 1 | 86 | 76 |
| 15 | I-32 + IIa<br>0,06 + 0,25 ppm<br>1 : 4 | 64 | 39 |
| 16 | I-38 + IIa<br>0,06 + 1 ppm<br>1 : 16 | 57 | 43 |
| 17 | I-38 + IIa<br>0.06 + 4 ppm<br>1 :64 | 86 | 76 |
| 18 | 1-38 + IIa<br>0,25 + 0,25 ppm<br>1 : 1 | 79 | 57 |
| 19 | I-38 + IIa<br>0,25 + 1 ppm<br>1 : 4 | 93 | 79 |
| 20 | I-38 + IIa<br>0,06 + 0,25 ppm<br>1 : 4 | 57 | 27 |

Tabelle fortgesetzt

| Beispiel | Wirkstoffmischung Konzentration Mischungsverhältnis | beobachteter Wirkungsgrad | berechneter Wirkungsgrad*) |
|---|---|---|---|
| 21 | I-23 + IIb.1<br>0,25 + 4 ppm<br>1 : 16 | 86 | 69 |
| 22 | I-23 + IIb.1<br>0,06 + 1 ppm<br>1 : 16 | 43 | 20 |
| 23 | I-23 + IIb.1<br>0,06 + 4 ppm<br>1 : 64 | 71 | 57 |
| 24 | I-23 + IIb.1<br>0,25 + 0,25 ppm<br>1 : 1 | 50 | 39 |
| 25 | I-23 + IIb.1<br>0,25 + 1 ppm<br>1 : 4 | 64 | 49 |
| 26 | I-23 + IIb.1<br>0,06 + 0,25 ppm<br>1 : 4 | 29 | 14 |
| 27 | I-32 + IIb.1<br>0,25 + 4 ppm<br>1 : 16 | 99 | 88 |
| 28 | I-32 + IIb.1<br>0,06 + 1 ppm<br>1 : 16 | 57 | 37 |
| 29 | I-32 + IIb.1<br>0,06 + 4 ppm<br>1 : 64 | 79 | 69 |
| 30 | I-32 + IIb.1<br>0,25 + 0,25 ppm<br>1 : 1 | 86 | 76 |
| 31 | I-32 + IIb.1<br>0,06 + 0,25 ppm<br>1 : 4 | 64 | 39 |
| 32 | I-38 + IIb.1<br>0,25 + 4 ppm<br>1 : 16 | 93 | 79 |
| 33 | I-38 + IIb.1<br>0,06 + 1 ppm<br>1 : 16 | 50 | 29 |
| 34 | I-38 + IIb.1<br>0,06 + 4 ppm<br>1 : 64 | 79 | 63 |

Tabelle fortgesetzt

| Beispiel | Wirkstoffmischung Konzentration Mischungsverhältnis | beobachteter Wirkungsgrad | berechneter Wirkungsgrad*) |
|---|---|---|---|
| 35 | I-38 + IIb.1<br>0,25 + 0,25 ppm<br>1 : 1 | 71 | 57 |
| 36 | I-38 + IIb.1<br>0,25 + 1 ppm<br>1 : 4 | 86 | 64 |
| 37 | I-38 + IIb.1<br>0,06 + 0,25 ppm<br>1 : 4 | 57 | 27 |
| *) berechnet nach der Colby-Formel | | | |

Aus den Ergebnissen der Versuche geht hervor, daß der beobachtete Wirkungsgrad in allen Mischungsverhältnissen höher ist, als nach der Colby-Formel vorausberechnet.

**Patentansprüche**

**1.** Fungizide Mischungen, enthaltend

A) Carbamate der Formel I,

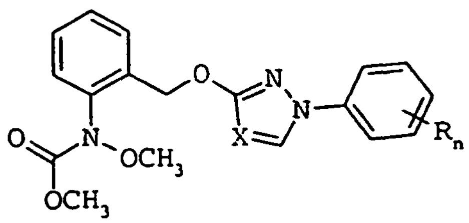

I

in der X CH und N bedeutet, n für 0, 1 oder 2 steht und R Halogen, $C_1$-$C_4$-Alkyl und $C_1$-$C_4$-Halogenalkyl bedeutet, wobei die Reste R verschieden sein können, wenn n für 2 steht, eines seiner Salze oder Addukte, und

B) Imidazolderivate der Formel II

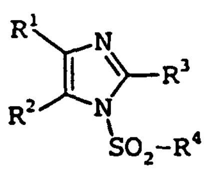

II

in der $R^1$ und $R^2$ Halogen und Phenyl, welches durch Halogen oder $C_1$-$C_4$-Alkyl substituiert sein kann, bedeuten oder

$R^1$ und $R^2$ gemeinsam mit der überbrückenden C=C-Doppelbindung eine 3,4-Difluormethylendioxyphenyl-Gruppe bilden;

$R^3$ Cyano oder Halogen, und

$R^4$ Di-($C_1$-$C_4$-alkyl)amino oder

Isoxazol-4-yl, welches zwei $C_1$-$C_4$-Alkylreste tragen kann, bedeuten,

in einer synergistisch wirksamen Menge.

**2.** Fungizide Mischung nach Anspruch 1, wobei das Imidazolderivat II der Formel IIa

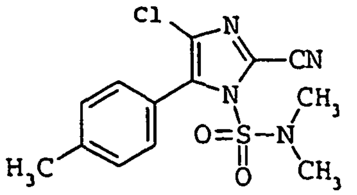

IIa

entspricht.

**3.** Fungizide Mischung nach Anspruch 1, wobei das Imidazolderivat II der Formel IIb

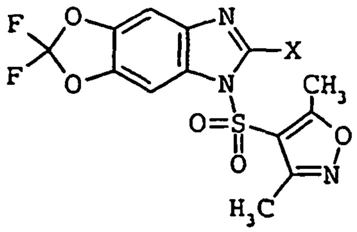

IIb

wobei X Chlor oder Brom bedeutet, entspricht.

**4.** Fungizide Mischung nach Ansprüchen 1 bis 3, **dadurch gekennzeichnet, daß** das Gewichtsverhältnis der Carbamate I zu den Imidazolderivaten der Formel II 20:1 bis 1:100 beträgt.

**5.** Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume mit Carbamaten der Formel I gemäß Anspruch 1 und Imidazolderivaten der Formel II gemäß Ansprüchen 1 bis 3 behandelt.

**6.** Verfahren nach Anspruch 5, **dadurch gekennzeichnet, daß** man Carbamate der Formel I gemäß Anspruch 1 und Imidazolderivate der Formel II gemäß Ansprüchen 1 bis 3 gleichzeitig, und zwar gemeinsam oder getrennt, oder nacheinander ausbringt.

**7.** Verfahren nach Anspruch 5 oder 6, **dadurch gekennzeichnet, daß** man die Carbamate der Formel I gemäß Anspruch 1 in einer Menge von 0,01 bis 2,5 kg/ha aufwendet.

**8.** Verfahren nach den Ansprüchen 5 bis 7, **dadurch gekennzeichnet, daß** man die Imidazolderivate der Formel II gemäß den Ansprüchen 1 bis 3 in einer Menge von 0,01 bis 10 kg/ha aufwendet.

**9.** Verwendung der Carbamate der Formel I gemäß Anspruch 1 zur Herstellung einer fungizid wirksamen synergistischen Mischung gemäß Anspruch 1.

**10.** Verwendung der Imidazolderivate der Formel II gemäß Ansprüchen 1 bis 3 zur Herstellung einer fungizid wirksamen synergistischen Mischung gemäß Anspruch 1.

**Claims**

**1.** A fungicidal mixture, comprising

A) carbamates of the formula I,

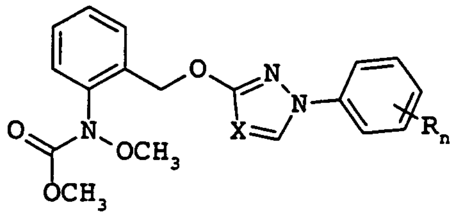

I

in which X is CH or N, n is 0, 1 or 2 and R is halogen, $C_1$-$C_4$-alkyl or $C_1$-$C_4$-haloalkyl, where the radicals R can be different if n is 2, one of its salts or adducts and,
B) imidazole derivatives of the formula II

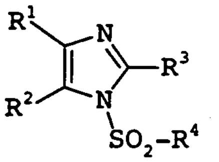

II

in which $R^1$ and $R^2$ are halogen or phenyl, which may be substituted by halogen or $C_1$-$C_4$-alkyl, or

$R^1$ and $R^2$ together with the bridging C=C double bond form a 3,4-difluoromethylenedioxyphenyl group;
$R^3$ is cyano or halogen, and
$R^4$ is di($C_1$-$C_4$-alkyl)amino or isoxazol-4-yl, which may carry two $C_1$-$C_4$-alkyl radicals,

in a synergistically effective amount.

**2.** The fungicidal mixture according to claim 1, wherein the imidazole derivative II corresponds to the formula IIa

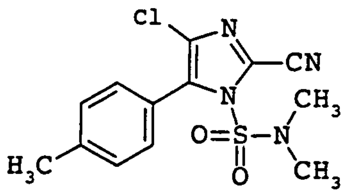

IIa

**3.** The fungicidal mixture according to claim 1, wherein the imidazole derivative II corresponds to the formula IIb

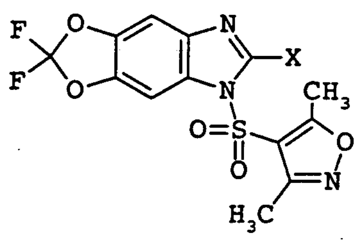

IIb

where X is chlorine or bromine.

**4.** The fungicidal mixture according to any of claims 1 to 3, wherein the weight ratio of the carbamates I to the imidazole derivatives of the formula II is from 20:1 to 1:100.

**5.** A method for controlling harmful fungi, which comprises treating the harmful fungi, their habitat or the plants, seeds,

soils, areas, materials or spaces to be kept free from them with carbamates of the formula I according to claim 1 and imidazole derivatives of the formula II according to any of claims 1 to 3.

**6.** The method according to claim 5, wherein the carbamates of the formula I according to claim 1 and the imidazole derivatives of the formula II according to any of claims 1 to 3 are applied simultaneously, i.e. either jointly or separately, or successively.

**7.** The method according to claim 5 or 6, wherein the carbamates of the formula I according to claim 1 are applied in an amount of from 0.01 to 2.5 kg/ha.

**8.** The method according to any of claims 5 to 7, wherein the imidazole derivatives of the formula II according to any of claims 1 to 3 are applied in an amount of from 0.01 to 10 kg/ha.

**9.** The use of the carbamates of the formula I according to claim 1 for preparing a fungicidally active synergistic mixture according to claim 1.

**10.** The use of the imidazole derivatives of the formula II according to any of claims 1 to 3 for preparing a fungicidally active synergistic mixture according to claim 1.

**Revendications**

**1.** Mélanges fongicides contenant

A) des carbamates de la formule I :

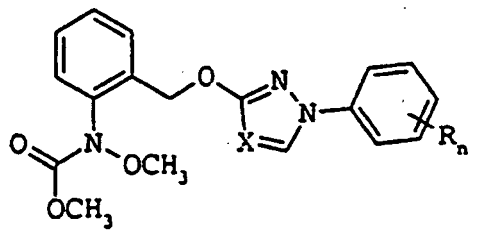

I

dans laquelle X représente CH et N, n vaut 0, 1 ou 2 et R représente de l'halogène, un groupe alkyle en $C_1$-$C_4$ et un groupe halogénoalkyle en $C_1$-$C_4$, les radicaux R pouvant être différents lorsque n vaut 2, un de leurs sels ou produits d'addition, et

B) des dérivés d'imidazole de la formule II :

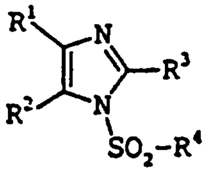

II

dans laquelle $R^1$ et $R^2$ représentent de l'halogène ou du phényle, qui peut être substitué par de l'halogène ou un alkyle en $C_1$-$C_4$, ou

$R^1$ et $R^2$ forment conjointement avec la double liaison C=C formant pont un groupe 3,4-difluorométhylènedioxyphényle,

$R^3$ représente un groupe cyano ou de l'halogène, et

$R^4$ représente un groupe di-($C_1$-$C_4$-alkyl)-amino ou isoxazol-4-yle, qui peut porter deux radicaux alkyle en $C_1$-$C_4$, en une quantité efficace du point de vue synergique.

**2.** Mélange fongicide suivant la revendication 1, dans lequel le dérivé d'imidazole II correspond à la formule IIa :

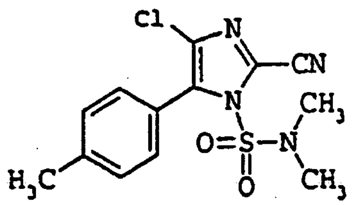

IIa

3. Mélange fongicide suivant la revendication 1, dans lequel le dérivé d'imidazole II correspond à la formule IIb :

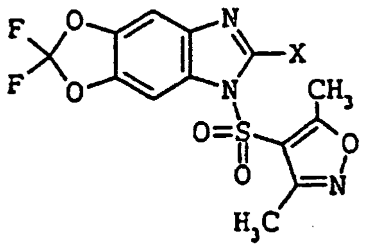

IIb

où X représente du chlore ou du brome.

4. Mélange fongicide suivant les revendications 1 à 3, **caractérisé en ce que** le rapport pondéral entre les carbamates I et les dérivés d'imidazole de la formule II est de 20/1 à 1/100.

5. Procédé pour lutter contre des champignons nuisibles, **caractérisé en ce qu'**on traite les champignons nuisibles, leur environnement ou les plantes, semences, sols, surfaces, matériels ou volumes dont il faut les libérer avec des carbamates de la formule I suivant la revendication 1 et des dérivés d'imidazole de la formule II suivant les revendications 1 à 3.

6. Procédé suivant la revendication 5, **caractérisé en ce qu'**on répand des carbamates de la formule I suivant la revendication 1 et des dérivés d'imidazole de la formule II suivant les revendications 1 à 3 simultanément, et cela conjointement ou séparément, ou successivement.

7. Procédé suivant la revendication 5 ou 6, **caractérisé en ce qu'**on applique les carbamates de la formule I suivant la revendication 1 en une quantité de 0,01 à 2,5 kg/ha.

8. Procédé suivant les revendications 5 à 7, **caractérisé en ce qu'**on applique les dérivés d'imidazole de la formule II suivant les revendications 1 à 3 en une quantité de 0,01 à 10 kg/ha.

9. Utilisation des carbamates de la formule I suivant la revendication 1, pour la préparation d'un mélange selon la revendication 1, synergique, efficace du point de vue fongicide.

10. Utilisation des dérivés d'imidazole de la formule II suivant les revendications 1 à 3, pour la préparation d'un mélange suivant la revendication 1, synergique, efficace du point de vue fongicide.